Europäisches Patentamt

European Patent Office

Office européen des brevets

(11) Veröffentlichungsnummer: **0 203 378**
**A2**

(12) # EUROPÄISCHE PATENTANMELDUNG

(21) Anmeldenummer: 86105668.7

(22) Anmeldetag: 24.04.86

(51) Int. Cl.⁴: **B01D 13/01** , F28F 9/00 ,
F28F 21/06 , //A61M1/18

(30) Priorität: 27.04.85 DE 3515279
28.09.85 DE 3534618
03.10.85 DE 3535386
07.04.86 DE 3611623

(43) Veröffentlichungstag der Anmeldung:
03.12.86 Patentblatt 86/49

(84) Benannte Vertragsstaaten:
BE DE FR GB IT NL SE

(71) Anmelder: **Akzo GmbH**
**Postfach 10 01 49 Kasinostrasse 19-23**
**D-5600 Wuppertal-1(DE)**

(72) Erfinder: **Baurmeister, Ulrich, Dr. Dr.-Ing.**
**Moltkestrasse 67**
**D-5600 Wuppertal 1(DE)**
Erfinder: **Sticksel, Werner, Dr. Dr.-Ing.**
**Friedhofstrasse 10**
**D-6453 Seligenstadt(DE)**
Erfinder: **Hoff, Elmar, Dipl.-Ing.**
**Bruchstrasse 38**
**D-4320 Hattingen(DE)**

(54) **Stoff- und/oder Wärmeaustauscher.**

(57) Stoff-und/oder Wärmeaustauscher, bestehend aus einem Bündel von Hohlfäden (1) von im wesentlichen gleicher Länge, deren Enden in eine Vergußmasse (5) eingebettet sind, und einem im wesentlichen zylindrischen Gehäuse mit Anschlußstutzen (9; 10; 11; 12) zur Zu-und Abfuhr mindestens zweier Medien, wobei das erste Medium durch die Hohlfäden (1) und das zweite Medium am Strömungseingang (11) des Gehäuses (8) radial nach innen, am Strömungsausgang (12) radial nach außen geführt wird, das Gehäuse aus einem im wesentlichen rohrförmigen Körper (8) und zwei Kappen (6; 7) besteht, wobei zwischen dem Hohlfadenbündel (1) und dem Gehäusemantel (8) ein Stützelement (2), das wenigstens je eine Durchtrittsöffnung aufweist, die jeweils mit der mit dem zweiten Verteilerraum in Verbindung stehenden Durchtrittsöffnung verbunden ist, angeordnet ist.

Fig. 2

## Stoff-und/oder Wärmeaustauscher

Gegenstand der Erfindung ist ein Stoff-und/oder Wärmeaustauscher, bestehend aus einem Bündel von Hohlfäden von im wesentlichen gleicher Länge, deren Enden in eine Vergußmasse eingebettet sind, und einem im wesentlichen zylindrischen Gehäuse mit Anschlußstutzen zur Zu- und Abfuhr mindestens zweier Medien, wobei das erste Medium durch die Hohlfäden hindurch und das zweite Medium am Strömungseingang des Gehäuses radial nach innen, am Strömungsausgang radial nach außen geführt wird und das Gehäuse aus einem im wesentlichen rohrförmigen Körper und zwei Kappen besteht.

Mit der Erfindung wird die Aufgabe gelöst, einen Stoff-und/oder Wärmeaustauscher zur Verfügung zu stellen, der teil-bzw. vollautomatisch hergestellt werden kann und der so konstruiert ist, daß möglichst viele seiner Bestandteile wiederverwendbar sind.

Das Anordnen eines Stützelementes gestattet es, das Hohlfadenbündel, auch schon bevor es in das Gehäuse eingebracht worden ist, zu transportieren, zu handhaben usw., ohne es zu beschädigen. Ein mit einem den jeweiligen Anforderungen entsprechenden Stützelement versehenes Hohlfadenbündel kann darüber hinaus auch zumindest mit dem Gehäusemantel lösbar verbunden werden, so daß eine Wiederverwendung zumindest des Gehäusemantels möglich wird. Da das Gehäuse die Anschlüsse für die Zu-und Abfuhr der am Austausch beteiligten Medien aufweist und an das Gehäuse hinsichtlich Präzision, Dichtigkeit u.dgl. hohe Anforderungen gestellt werden, stellt eine Wiederverwendbarkeit selbst nur des Gehäusemantels auch einen entscheidenden wirtschaftlichen Faktor in solchen Fällen dar, in denen das eigentliche Austauscherelement, also das Hohlfadenbündel,nach nur einmaligen kurzen Gebrauch verworfen wird oder werden muß, wie beispielswiese bei der Blutdialyse. An das Stützelement brauchen nicht dieselben hohen Anforderungen wie an das Gehäuse gestellt zu werden, so daß es auf einfachere Weise und mit weniger Materialaufwand und somit auch kostengünstiger hergestellt werden kann.

Zweckmäßige Weiterbildungen des Gegenstands nach Anspruch 1 sowie sich daraus ableitende zweckmäßige Erfindungsgegenstände zur Lösung derselben, eingangs genannten,Aufgabe sind in den Unteransprüchen beschrieben.

Das Stützelement kann beispielsweise eine mehr oder weniger dicke Folie sein, die in mehreren Lagen um das Hohlfadenbündel herumgewickelt ist, ein Gitterrohr, ein Rohr mit einer Vielzahl von Durchbrüchen oder aber ein solches, wie es in den Figuren dargestellt und weiter unten beschrieben ist. Eine gute Verteilung des zweiten Mediums wird dann erreicht, wenn im Bereich der Vergußmasseeinbettungen mehrere Durchtrittsöffnungen in Umfangsrichtung möglichst gleichmäßig verteilt angeordnet sind.

Darüber hinaus ist eine Kanalbildung zwischen den Hohlfäden und dem Stützelement einerseits und dem Stützelement und dem Gehäusemantel andererseits zu vermeiden, da das durch derartige Kanäle strömende Medium am Austausch nur unzureichend oder überhaupt nicht teilnimmt. Aus diesem Grunde soll das Hohlfadenbündel innerhalb des Stützelementes möglichst gleichmäßig verteilt angeordnet sein und sollen die äußeren Hohlfäden des Bündels das Stützelement auch berühren, also an diesem anliegen, damit die Ausbildung eines freien Ringkanals zwischen Hohlfäden und Stützelement vermieden wird. Dasselbe gilt auch für den Bereich zwischen Stützelement und Gehäusemantel, da auch hier die Ausbildung von Kanälen, die eine Strömung in Längsrichtung zulassen, möglichst vermieden werden sollte. Aus diesem Grunde werden das Stützelement und der Gehäusemantel vorzugsweise so bemessen, daß das Stützelement zumindest auf einem Längenabschnitt an der Innenfläche des Gehäusemantels anliegt oder aber höchstens nur einen äußerst - schmalen Ringkanal freiläßt.

Dieser zuletzt genannten Forderung steht die Forderung nach einem möglichst einfachen und im wahrsten Sinne des Wortes reibungslosen Einbringen des mit dem Stützelement versehenen Hohlfadenbündels in den Gehäusemantel gegenüber. Beiden Forderungen kann beispielsweise dadurch begegnet werden, daß das Hohlfadenbündel mit dem Stützrohr und der Gehäusemantel konisch ausgebildet werden. Eine andere Lösungsmöglichkeit besteht darin, für das Stützelement ein Material zu verwenden, das beim Gebrauch des Austauschers quillt, also beispielsweise wasserquellbar ist, so daß das Stützelement vor dem Einbau so bemessen werden kann, daß es ohne Gewaltanwendung in den Gehäusemantel eingeschoben werden kann, sich bei der Inbetriebnahme des Austauschers durch das Quellen dann aber an die Innenfläche des Gehäusemantels anlegt. Dasselbe wird auch mit einem Gitterrohr erreicht, das in radialer Richtung elastisch leicht verformbar ist und das vor dem Einbringen in den Gehäusemantel des Austauschers im Vergleich zu diesem ein geringfügiges Übermaß aufweist. Bei Hohlfaden bündeln aus gewellten oder in anderer nicht geradliniger Form angeordneten Hohlfäden, die also eine gewisse Längung des Hohlfadenbündels zulassen, kann ein Stützelement verwendet werden, das bei Zugbelastung in Längsrichtung einen geringeren Umfang annimmt, so daß es in diesem Zustand problemlos in den Gehäusemantel eingeführt werden kann und sich nach Fortfall der Zugbeanspruchung demzufolge an die Gehäusemantelinnenfläche anlegt.

Wie sich aus dem Vorhergesagten ergibt, liegt der Stützkörper vorzugsweise auf seiner gesamten Länge, zumindest auf dem größten Teil seiner Länge an der Innenfläche des Gehäusemantels an. Das Stützelement kann demzufolge also auch lediglich zwischen den Einbettungen der Hohlfadenenden einen Außenumfang aufweisen, der größer ist als sein Außenumfang im Bereich der Einbettungen und insbesondere größer ist als der Innenumfang des Gehäusemantels des Austauschers, sofern es radial (reversibel) verformbar ist.

Wird für den Stützkörper ein poröser Werkstoff verwendet, so muß dieser eine ausreichende Anzahl nach außen offener durchgehender Poren aufweisen, um die Zufuhr des zweiten Mediums zu gewährleisten.

Bei der Verwendung von Hohlfäden, die beim Gebrauch oder infolge einer erforderlichen Vorbehandlung beispielsweise der Heißdampfsterilisation, schrumpfen, sollte auch das Stützelement in Längsrichtung zumindest um diesen dem Schrumpf der Hohlfäden entsprechenden Betrag in Längsrichtung verformbar sein, um ein Zerreißen der Hohlfäden zu vermeiden.

Unter "ähnliche Querschnitte" werden Querschnitte verstanden, die im mathematischen bzw. geometrischen Sinne ähnlich sind, sich also nicht hinsichtlich ihrer Form, sondern nur hinsichtlich ihrer Größe unterscheiden. Eine Ausgestaltungsform, bei der die beiden Vergußmasseeinbettungen dieser Definition entsprechend ähnliche Querschnitte aufweisen, erleichtert ebenfalls das Einschieben des Hohlfadenbündels in den Gehäusemantel.

Die Verbindung der Vergußmasseeinbettungen mit dem Gehäusemantel zum Abdichten der Verteilerräume für das erste Medium gegenüber den Verteilerräumen für das zweite Medium kann durch Verkleben, Vergießen od.dgl. erfolgen, wird vorzugsweise jedoch in Form einer lösbaren, jedoch fluiddichten Verbindung hergestellt. Auf diese Weise wird erreicht, daß der Gehäusemantel als wiederverwendbares Teil eingesetzt werden kann.

Bei Blutdialysatoren werden häufig alle mit dem Blut des Patienten in Berührung gebrachten Teile verworfen. Wenn das Blut des Patienten dabei durch die Hohlfäden strömt, zählen hierzu auch die Anschlußkappen mit den Anschlußstutzen für die Zu-und Abfuhr des Blutes bzw. des Dialysats. Es hat sich daher als zweckmäßig erwiesen, für diesen Einsatzzweck die Anschlußkappen nur mit den Stutzen für die Zu-und Abfuhr des Blutes zu versehen und diese Kappen fluiddicht fest mit den Vergußmasseeinbettungen zu verbinden. Die Zu-und Abfuhrstutzen für das Dialysat werden dann an dem wiederverwendbaren Gehäusemantel angeordnet.

In vielen anderen Fällen kann es zweckmäßig sein, sowohl die Kappen als auch den Gehäusemantel, die zusammen das Gehäuse des Austauschers bilden, als wiederverwendbare Teile einzusetzen und nur das Hohlfadenbündel mit den Vergußmasseeinbettungen und dem Stützelement zu verwerfen. Dabei können die Kappen die Anschlußstutzen für das erste und für das zweite Medium aufweisen oder wie hier vorgeschlagen, nur den Anschlußstutzen für das erste Medium aufweisen, während die Anschlußstutzen für das zweite Medium am Gehäusemantel angeordnet sind.

Für das Einbringen des Hohlfadenbündels ist es, wenn dieses rohrförmig ausgebildet ist, vorteilhaft, wenn dieses zumindest entlang einer Mantellinie aufgeschlitzt und somit aufklappbar ist, so daß das Hohlfadenbündel in das aufgeklappte Stützelement eingelegt werden kann, und nicht von einer Stirnseite her eingeschoben zu werden braucht. Da eine Dichtigkeit des Stützelements, wie sich aus dem Vorhergesagten ergibt, nicht erforderlich ist, stört es auch nicht, wenn das Stützelement nach dem Einlegen des Hohlfadenbündels und dem Wiederzuklappen eine Fuge aufweist. Ein eine Fuge aufweisendes Stützelement stellt also eine Form dar, durch welche der teil- bzw. vollautomatische Herstellungsprozeß des Gegenstands der Erfindung wesentlich erleichtert wird.

Die Ausführungsform, bei welcher alle Anschlußstutzen in den Kappen angeordnet sind, hat den Vorteil, daß der rohrförmige Körper in diesem Fall ohne größere Werkzeugkosten in seinen äußeren Dimensionen verändert werden kann, da in diesen keine Anschlußstutzen vorgesehen werden müssen.

Im einfachsten Fall genügt eine einzige Durchtrittsöffnung, die dann als direkte Weiterführung des Anschlußstutzens angesehen werden kann. In der Regel werden jedoch mehrere Durchtrittsöffnungen vorgesehen. Sie sollen möglichst nahe an der Vergußmasse angeordnet sein.

Die Kappen können fest mit dem rohrförmigen Körper verbunden sein. Sie können aber auch lösbar angeordnet sein und wiederverwendet werden.

Besonders günstig es es hierbei, wenn der zweite Verteilerraum ringförmig um den Außenmantel des rohrförmigen Körpers angeordnet ist, und mehrere Durchtrittsöffnungen am Umfang des Außenmantels vorgesehen sind. Dabei ist es besonders vorteilhaft, wenn durch spezielle Gestaltung des ringförmigen Querschnitts des zweiten Verteilerraums, durch unterschiedliche Querschnittsflächen der Durchtrittsöffnungen und/oder durch spezielle Verteilung der Durchtrittsöffnungen am Umfang des rohrförmigen Körpers erreicht wird, daß die Beaufschlagung mit dem zweiten Medium (Zu-bzw. Abfuhr) des Hohlfadenbündels auf dessen Umfang gleichmäßig erfolgt. Bei unterschiedlichen Querschnittsflächen der Durchtrittsöffnungen kann die größte Öffnung, die naturgemäß gegenüber dem Anschlußstutzen um 180° verdreht angeordnet ist, zum Einbringen der Vergußmasse dienen.

Die Durchtrittsöffnungen werden in der Regel radial durch die Wand des rohrförmigen Körpers hindurchtreten, sie können aber auch bei entsprechender ringförmiger Ausbildung der Rohrwandung axial in den gebildeten Ringkanal eintreten.

Aufgabe der vorliegenden Erfindung ist es darüber hinaus, geeignete Verfahren für die Herstellung des erfindungsgemäßen Stoff-und/oder Wärmeaustauschers zur Verfügung zu stellen, die sich auch in einen vollkontinuierlichen Herstellungsprozeß integrieren lassen und die insbesondere auch die häufig auftretenden Dichtungsprobleme vermeiden.

Gelöst wird diese Aufgabe durch ein Verfahren, bei dem ein Hohlfadenbündel axial in ein Gehäuse eingeführt und mittels einer Vergußmasse an beiden Enden abgedichtet wird, das dadurch gekennzeichnet ist, daß ein rohrförmiges Gehäuse, dessen beide Enden möglichst geringfügig erweitert sind, wobei auf die erweiterten Enden des Gehäuses je ein ringförmiger Körper aufgebraucht wird, der am freien Ende in seiner Innenabmessung der Außenkontur des Hohlfadenbündels mit Stützelement entspricht und von dieser Innenabmessung zunächst auf die Innenkontur des erweiterten Endes des Gehäuses übergeht, verwendet wird, daß die Enden des eingeführten Hohlfadenbündels mit Stützelement derart in eine Vergußmasse dicht eingebettet werden, daß die Vergußmasse den freien Raum im ringförmigen Körper und zumindest teilweise im erweiterten Gehäuseende ausfüllt, daß nach dem Festwerden der Vergußmasse der ringförmige Körper entfernt wird und daß dann das überstehende, mit Vergußmasse zusammengefaßte Hohlfadenbündelende mit Stützelement außerhalb des Gehäuses im Bereich, in dem der Außenquerschnitt der Vergußmasse größer ist als der Außenquerschnitt des Hohlfadenbündels, abgeschnitten wird.

Dieses Verfahren hat den Vorteil, daß

-das Ausfransen der Hohlfäden, wie sonst üblich, unterbleibt,

-die Herstellung von Hohlfadenmodulen automatisiert werden kann,

-beim hergestellten Modulteil eine dichte Berührung zwischen Vergußmasse und Gehäuseende gewährleistet werden kann,

-eine besonders günstige, in die Oberfläche der Vergußmasse integrierte Dichtfläche im Bereich der Erweiterung des Querschnitts der Vergußmasse erreicht wird.

Eine andere Lösung der Aufgabe bildet ein Verfahren, bei dem ein Hohlfadenbündel radial in ein Gehäuse eingeführt und mittels Vergußmasse an beiden Enden abgedichtet wird, das dadurch gekennzeichnet ist, daß das Hohlfadenbündel mit Stützelement in ein flexibles, axial aufgetrenntes, aufgebogenes Rohr eingelegt wird, das Rohr in die gewünschte geschlossene Form gebracht und an der axialen Trennlinie verbunden wird.

Eine weitere Lösung der Aufgabe bildet - schließlich ein Verfahren, bei welchem ein Hohlfadenbündel axial in ein Gehäuse eingeführt wird, das dadurch gekennzeichnet ist, daß ein Hohlfadenbündel mit Stützelement mit einer zwei-bis vielfachen Länge des Hohlfadenbündels im fertigen Austauscher in ein ebensolanges Mehrfachgehäuse eingeführt wird, das in den als Gehäuseendabschnitten vorgesehenen Bereichen Wanddurchbrüche für die Zu-bzw. Abfuhr von Austauschmedien aufweist, daß das Gehäuse mit dem sich darin befindenden Hohlfadenbündel mit Stützelement zu Austauschern gewünschter Länge zertrennt wird und daß die Hohlfadenendabschnitte anschließend in den Bereichen zwischen den Trennstellen und den Wanddurchbrüchen mittels einer Vergußmasse abgedichtet werden.

Die Erfindung wird nun anhand der Zeichnung näher erläutert. Es zeigt in vereinfachter schematischer Darstellungsweise:

Fig. 1 ein erfindungsgemäßes Hohlfadenbündel

Fig. 2 ein Austauschersystem, das unter Verwendung des Hohlfadenbündels nach Fig. 1 arbeitet,

Fig. 3 ein aufklappbares Stützelement in aufgeklapptem und geschlossenem Zustand,

Fig. 4 ein Stützelement mit einem Schnappverschluß im geschlossenen Zustand,

Fig. 5 ein Stützelement mit Schnappscharnieren,

Fig. 6 einen Teil eines erfindungsgemäßen Hohlfadenbündels mit Verteilerkappe und einem in Längsrichtung verformbaren Stützelement

Fig. 7 eine weitere Ausgestaltungsform eines in Längsrichtung verformbaren Stützelementes,

Fig. 8 eine weitere Ausgestaltungsform eines Verschlusses eines aufklappbaren Stützelementes.

Fig 9

bis 13 Ausgestaltungen, bei denen beide Anschlußstutzen in den Kappen angeordnet sind,

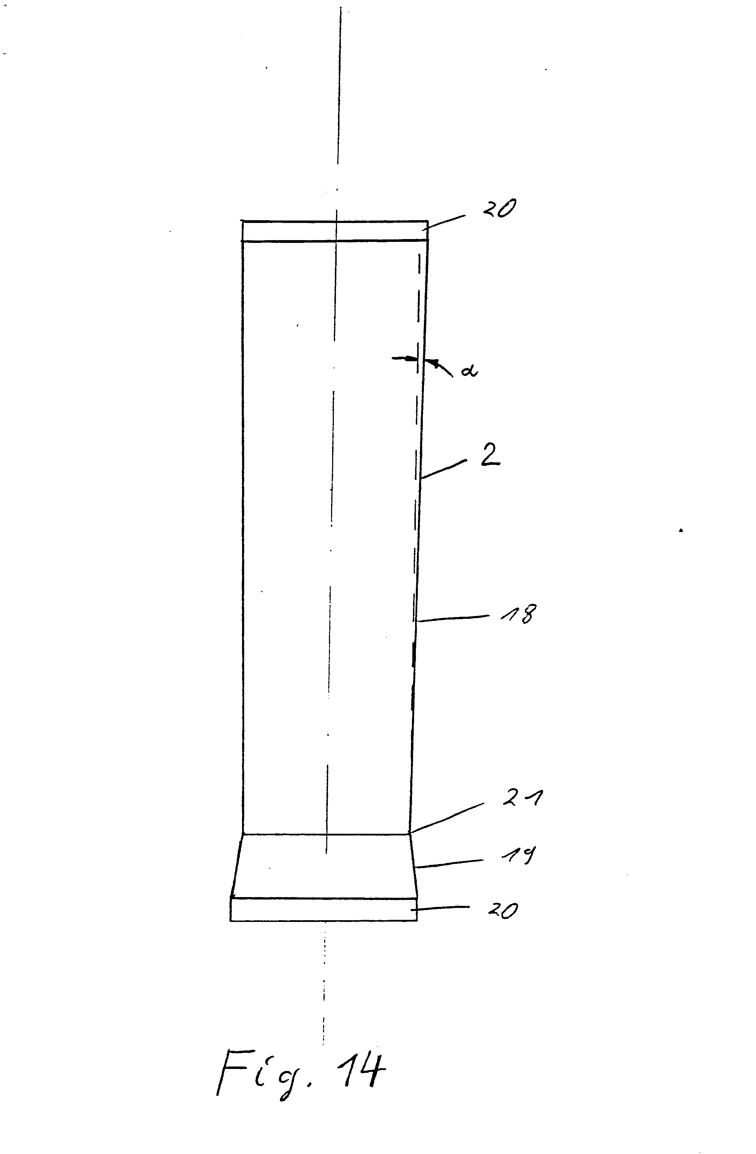

Fig. 14 eine günstige Ausgestaltung der Innenwand des rohrförmigen Körpers,

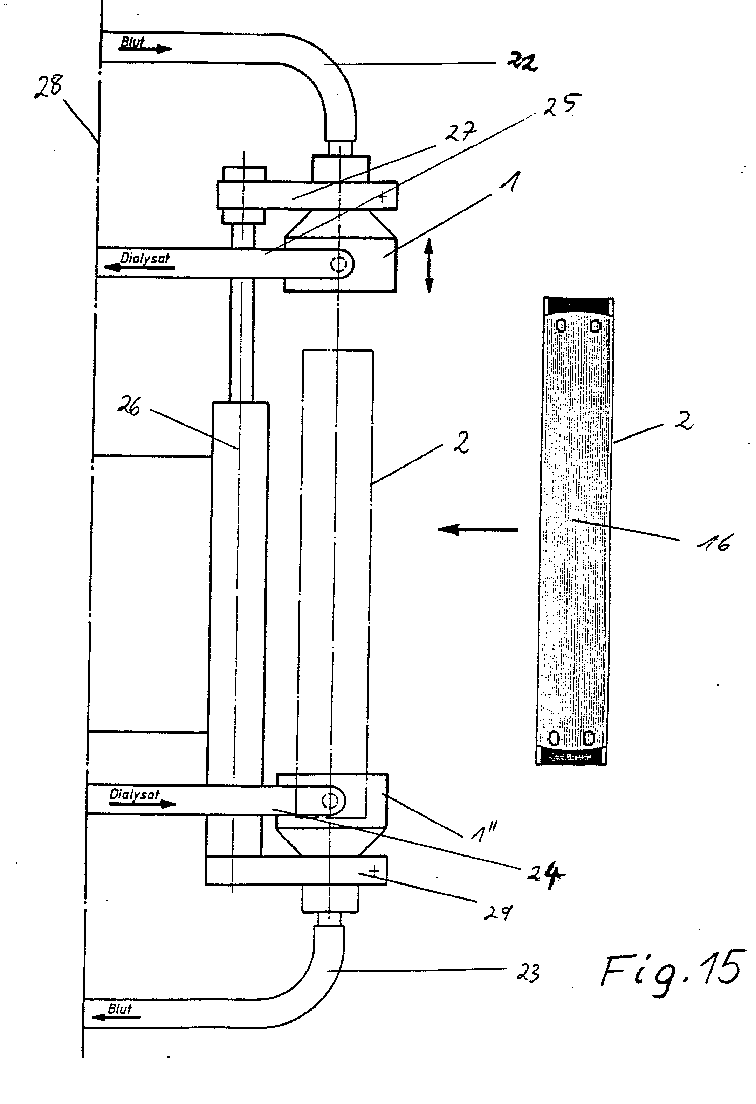

Fig. 15 einen Anwendungsfall für den erfindungsgemäßen Stoff-und/oder Wärmeaustauscher,

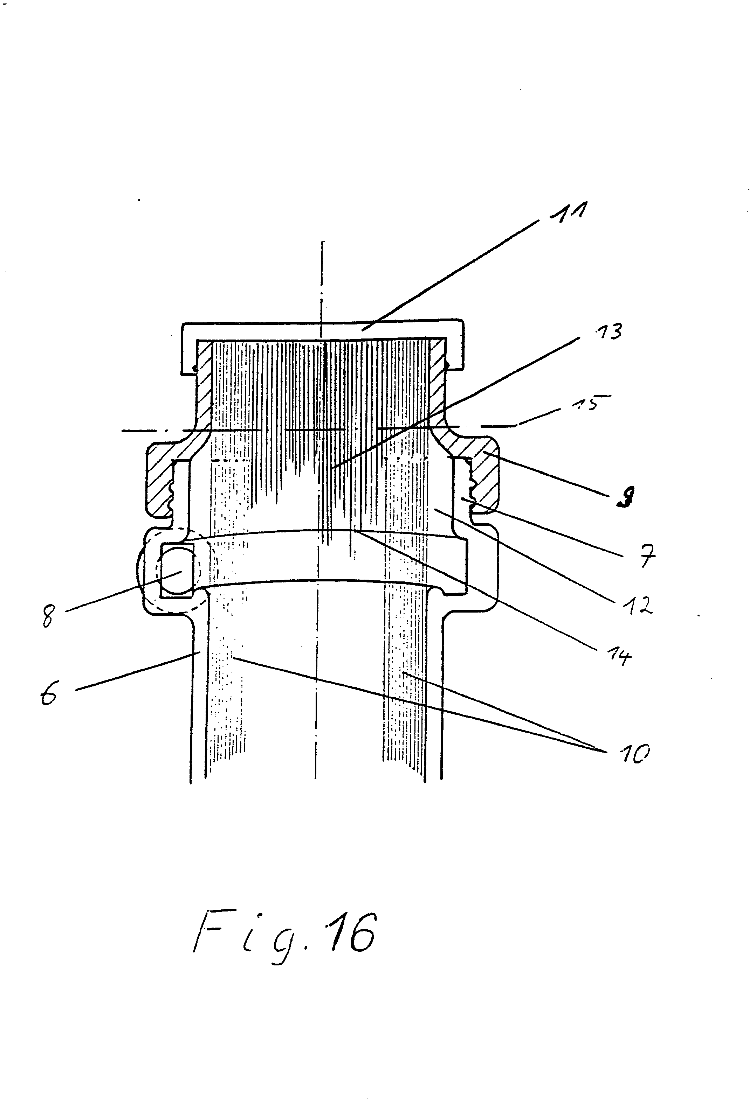

Fig. 16 in vereinfachter schematischer Darstellungsweise ein zum Herstellen des Austauschers geeignetes Verfahren,

Fig. 17

bis 19 in vereinfachter schematischer Darstellungsweise ein weiteres zum Herstellen des Austauschers geeignetes Verfahren,

Fig. 20

und 21 in vereinfachter schematischer Darstellungsweise ein weiteres zum Herstellen des Austauschers geeignetes Verfahren.

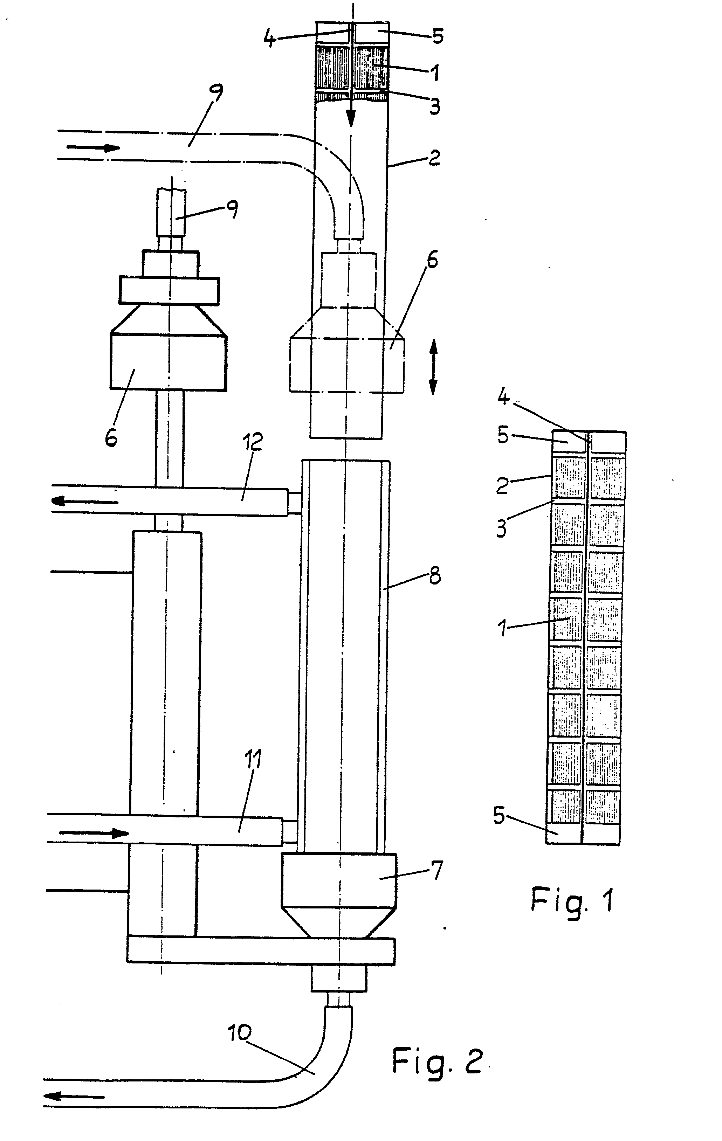

Das in Fig. 1 dargestellte erfindungsgemäße Hohlfadenbündel weist auf: Hohlfäden 1 von im wesentlichen gleicher Länge und das Stützelement 2, das in den Längenbereichen 3 in Längsrichtung um einen vorgegebenen Betrag verformbar ist, das die in seiner Längsrichtung verlaufende Fuge 4 aufweist und dieselbe Länge hat wie das Hohlfadenbündel 1 einschließlich der Vergußmasseeinbettungen 5, wobei die Vergußmasseeinbettungen 5 mit dem Stützelement 2 fest verbunden sind. Das Stützelement 2 besteht hierbei aus einem Gitterrohr, so daß es genügend Durchtrittsöffnungen für die Zufuhr und die Abfuhr des zweiten Mediums aufweist.

In Fig. 2 ist ein Austauschersystem dargestellt, bei dem die beiden Kappen 6 und 7 und der Gehäusemantel 8 wiederverwendbare Teile des Austauschersystems sind. Die Kappe 6 ist mit der Zufuhrleitung 9 und die Kappe 7 mit der Abführleitung 10,beide für das erste Medium, verbunden, während der Gehäusemantel 8 mit der Zufuhrleitung 11 und der Abführleitung 12 für das zweite Medium verbunden ist. Der Gehäusemantel 8 ist mit der Kappe 7 fest verbunden, während die Kappe 6 bewegbar angeordnet ist. Bei diesem System kann ein erfindungsgemäßes Hohlfadenbündel nach Fig. 1 von oben in den Gehäusemantel 8 eingeführt werden und durch Aufsetzen der Kappe 6 auf den Gehäusemantel 8 das System in Betriebsbereitschaft versetzt werden. Die bei einer solchen Anordnung erforderlichen Dichtungen zum Abdichten der Verteilerräume für das erste Medium gegenüber den Verteilerräumen für das zweite Medium sind hierbei nicht dargestellt, da sie sich in ihrer einfachsten Ausgestaltungsform für den Fachmann von selbst ergeben.Besonders geeignet sind beispielsweise aufblasbare O-Ring-Dichtungen.

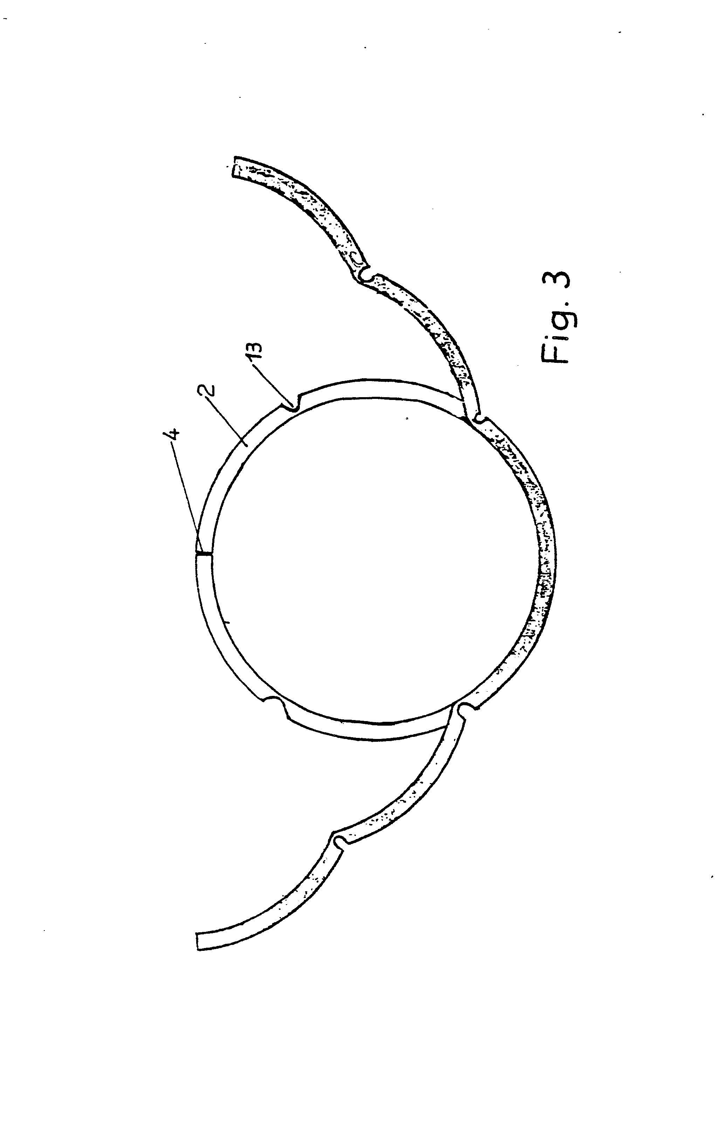

In Fig. 3 ist ein aufklappbares rohrförmiges Stützelement 2 sowohl im aufgeklappten wie im geschlossenen Zustand im Querschnitt dargestellt. Das Stützelement 2 weist insgesamt vier in Längsrichtung über die gesamte Länge des Stützelementes 2 verlaufende nutenförmige Vertiefungen 13 auf. Hierdurch wird erreicht, daß die Wandstärke des Stützelements 2 an diesen Stellen wesentlich geringer als in den übrigen Bereichen ist, so daß bei Verwendung eines nicht spröden Materials für das Stützelement 2 an diesen Stellen eine reversible gegebenenfalls biegeelastische Verformung des Stützelements 2 möglich ist, was das Auf-und Zuklappen desselben wesentlich vereinfacht. Im aufgeklappten Zustand können dann manuell oder maschinell die Hohlfäden eingelegt werden. Nach dem Einlegen der Hohlfäden kann das Stützelement dann wieder zugeklappt werden, wobei die Fuge 4 gebildet wird. Um zu vermeiden, daß das Stützelement 2 nach dem Einlegen der Hohlfäden und dem Zusammenklappen wieder aufklafft, können kraft-oder formschlüssig arbeitende Verschlüsse vorgesehen werden, z.B. Klebeband.

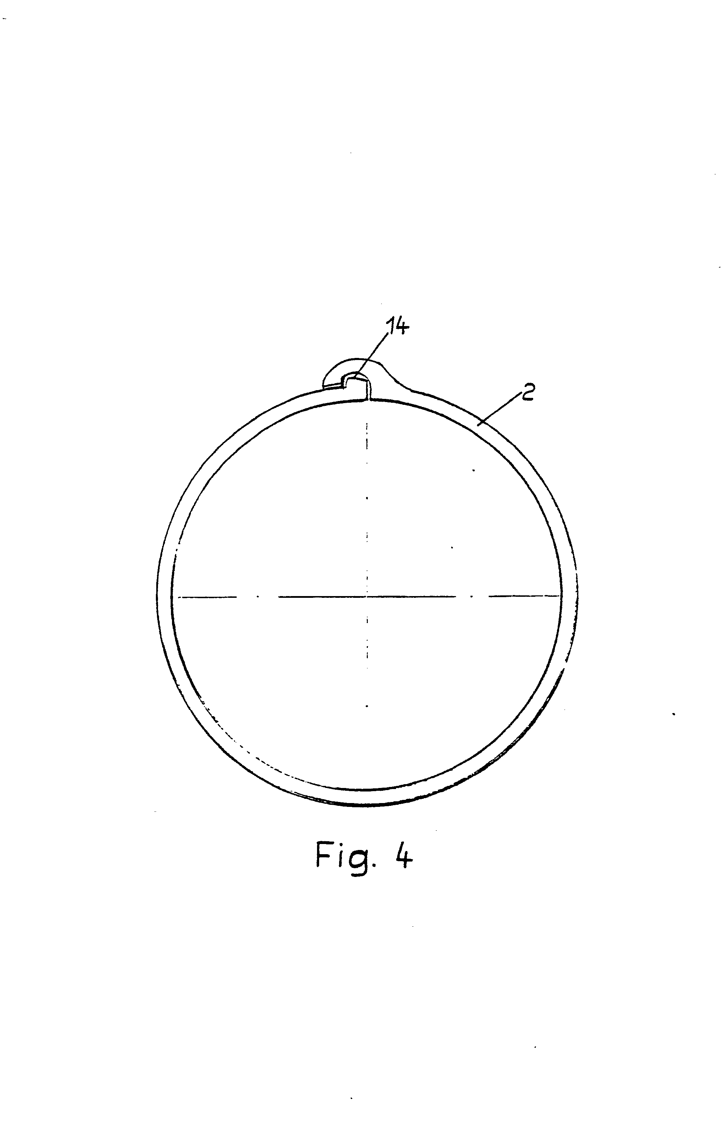

In Fig. 4 ist ein solcher formschlüssig wirkender Schnappverschluß 14 dargestellt, dessen Funktionsweise sich für den Betrachter von selbst ergibt und deshalb nicht näher erläutert zu werden braucht. Der Schnappmechanismus 14 kann sich über die gesamte Länge oder aber nur über kurze Teilstrecken erstrecken. Bei Verwendung eines solchen Stützelements wird die Kontur des inneren Umfangs des Gehäusemantels des Austauschers zweckmäßigerweise der Kontur des äußeren Umfangs des Stützelements 2 angepaßt, um die Bildung eines durchgehenden in Längsrichtung verlaufenden Kanals zwischen Gehäusemantel und Stützelement zu vermeiden. Zu diesem Zweck kann der Gehäusemantel auf seiner Innenseite mit einer in Längsrichtung verlaufenden Nut versehen werden, deren Kontur der Kontur des Schnappverschlusses 14 entspricht.

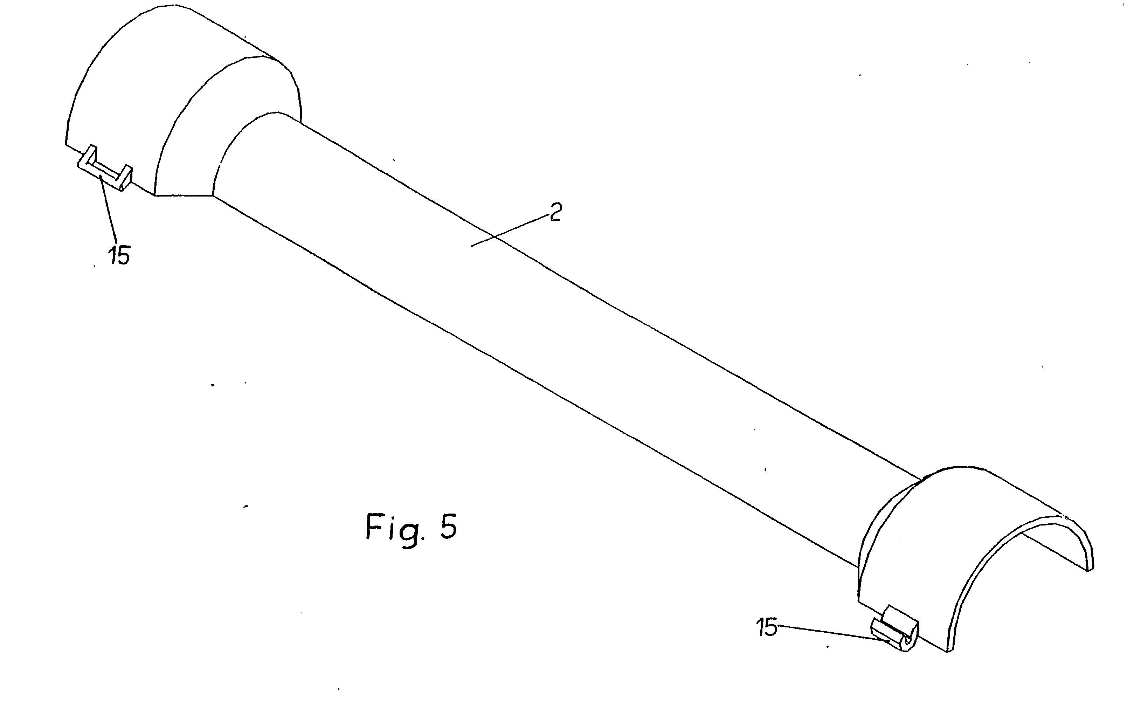

In Fig. 5 ist eine Hälfte eines Stützelements 2 dargestellt, das durch Schnappscharniere 15 mit seiner anderen Hälfte aufklappbar verbunden werden kann. Im geschlossenen Zustand weist dieses Stützelement 2 somit zwei Fugen auf. Die Durchlaßöffnungen für die Zu-und Abfuhr des zweiten Mediums sind hierbei nicht dargestellt.

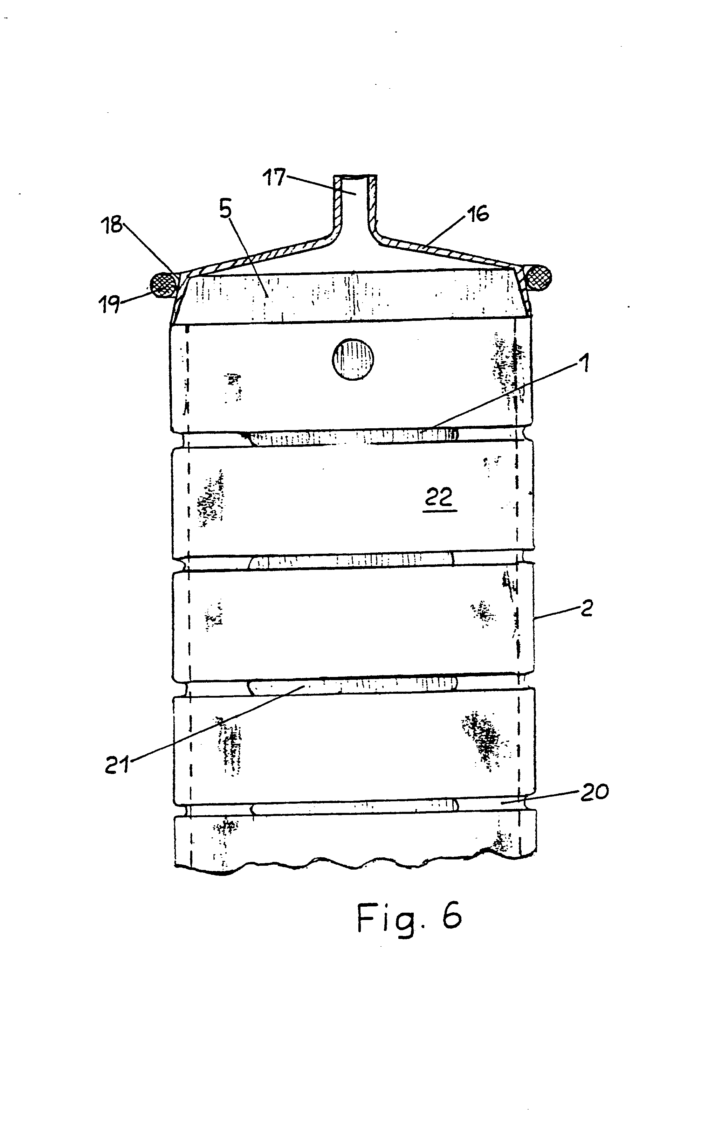

Der in Fig. 6 dargestellte Teil eines erfindungsgemäßen Hohlfadenbündels weist folgende Teile auf: die Hohlfäden 1, deren Enden in dem Vergußmasseblock 5 eingebettet sind, das in Längsrichtung um einen vorgegebenen Betrag verformbare Stützelement 2 und die mit dem Vergußmasseblock 5 fest verbundene Kappe 16 mit dem Anschlußstutzen 17 für die Zu-oder Abfuhr des ersten Mediums. An der Kappe 16 ist die Dichtfläche 18 und darauf die ringförmige Dichtung 19 angeordnet, die das Abdichten des Verteilerraums für das erste Medium gegenüber dem Verteilerraum für das zweite Medium bewirkt. Die in Längsrichtung um einen vorgegebenen Betrag gewährleistete Verformbarkeit wird durch die im Verhältnis zur übrigen Wandstärke des Stützelements 2 dünnen verformbaren in Umfangsrichtung gleichmäßig verteilt angeordneten verformbaren Rippen 20 erreicht. Zwischen den Rippen 20 befinden sich die Durchbrüche 21. Das Stützelement 2 kann beim Schrumpfen der Hohlfäden 1 in Längsrichtung solange verformt, also verkürzt werden, bis die relativ dickwandigen ringförmigen Abschnitte 22 des Stützelements 2 sich berühren. Die in Fig. 6 nicht dargestellte Seite des Hohlfadenbündels kann genauso ausgeführt sein wie die dargestellte Seite, sie kann jedoch auch ohne Kappe ausgebildet sein.

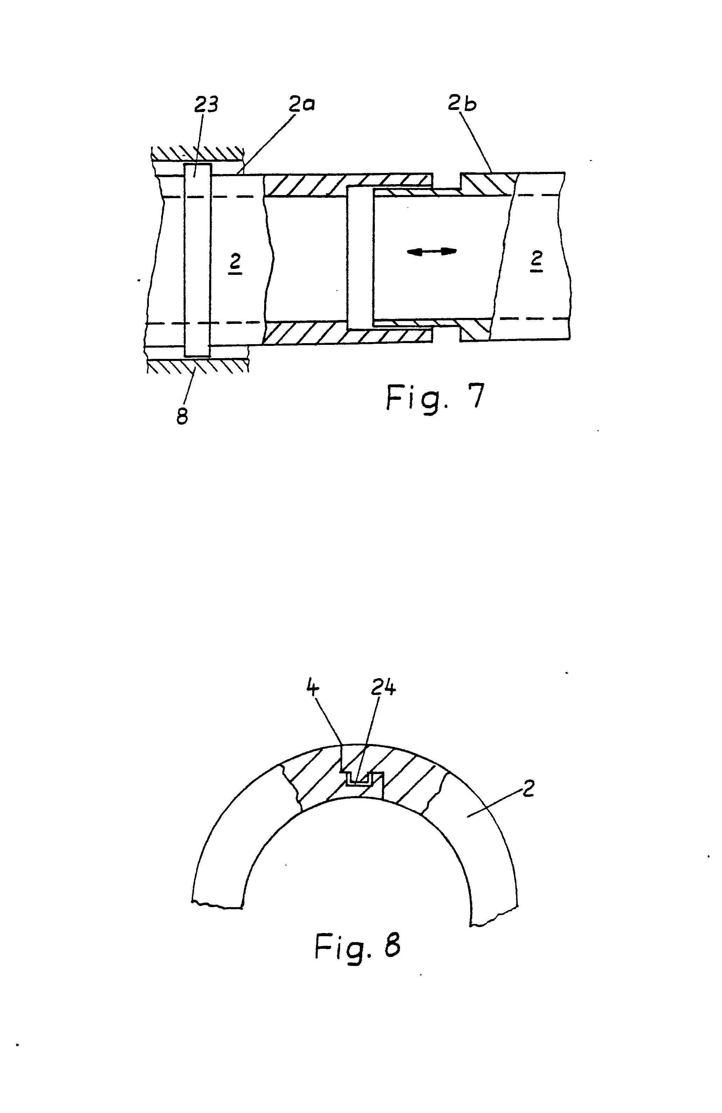

In Fig. 7 ist ein Abschnitt eines Stützelementes 2 dargestellt, das aus wenigstens zwei Teilen 2a; 2b besteht, die teleskopartig ineinander verschiebbar angeordnet sind. Auch diese Ausführungsform gestattet einen Längenausgleich des Stützelement 2 bei einer Längenveränderung der (nicht dargestellten) Hohlfäden, wie sie oben bereits beschrieben wurde. Das Stützelement 2 weist darüber hinaus einen ringförmigen Längenabschnitt 23 auf, der einen größeren Umfang als die übrigen Längenabschnitte des Stützelements 2 hat und im wesentlichen der Gestalt und den Abmessungen der Innenkontur des (nur angedeuteten) Gehäusemantels 8 des Austauschers angepaßt ist, so daß an dieser Stelle eine Abdichtung zur Vermeidung eines in Längsrichtung gerichteten Flüssigkeitsstroms erreicht, also ein Ringkanal vermieden wird.

Fig. 8 zeigt im Querschnitt einen druckknopfähnlichen Verschluß 24 für ein aufklappbares Stützelement 2. Dieser Verschluß hat den Vorteil, daß die äußere Kontur des Stützelementes 2 keine Veränderung seiner Kontur aufweist, wie dies beispielsweise bei der Ausführungsform nach Fig. 4 der Fall ist. Auch bei diesem Verschluß wird die Fuge 4 gebildet.

Das Verschließen bzw. Zusammenhalten des aufklappbaren Stützelements nach der Erfindung kann darüber hinaus auch durch Kleben oder Schweißen erfolgen.

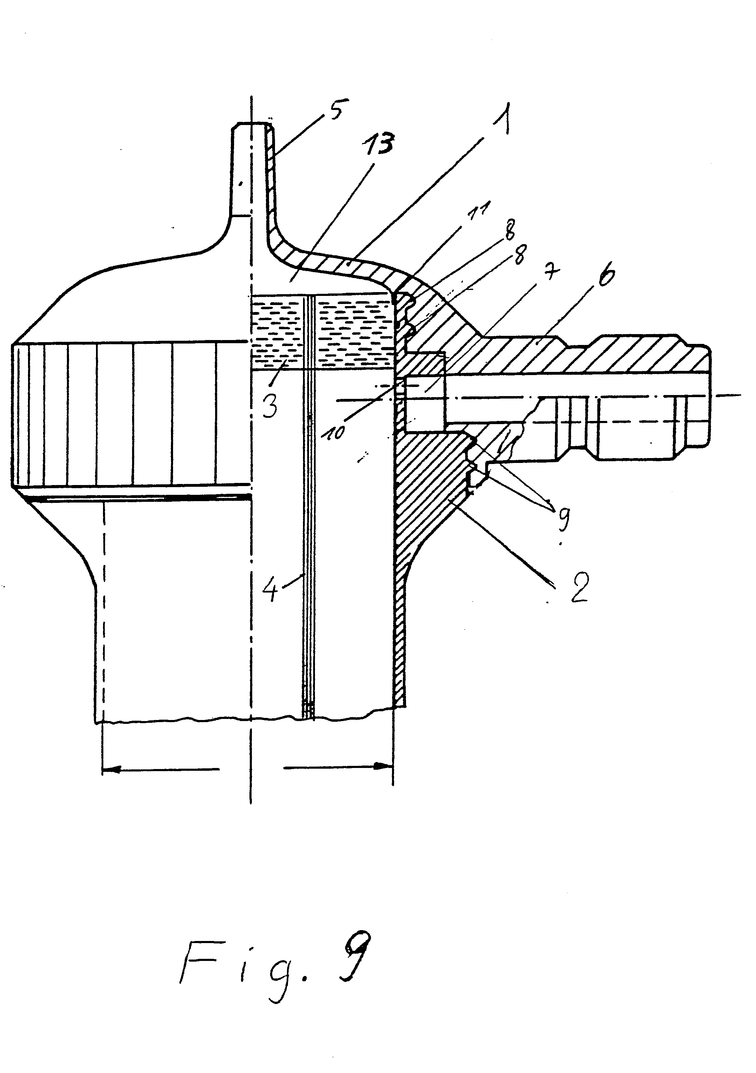

Figur 9 zeigt das Ende eines erfindungsgemäßen Stoff-und/oder Wärmeaustauschers. Mit 1 ist die Kappe und mit 2 der im wesentlichen rohrförmige Körper bezeichnet. Vom Hohlfadenbündel mit dem Stützelement sind einzelne Hohlfäden 4 als Striche eingezeichnet. Die Enden der Hohlfäden 4 sind in eine Vergußmasse 3 eingebettet. Die Kappe 1 besitzt zwei Anschlußstutzen 5, 6. Der Anschlußstutzen 5 führt in den ersten Verteilerraum 13, der stirnseitig angeordnet ist, während der Anschlußstutzen 6 in den zweiten Verteilerraum 7 führt, welcher von der Kappe 6 und vom Außenmantel des im wesentlichen rohrförmigen Körpers 2 gebildet wird. Die Nasen bzw. Ausbuchtungen 8, 9 können als Schraub-oder Schnapp-Verschluß wirken. Aus dem Verteilerraum 7 führt mindestens eine Durchtrittsöffnung 10 radial in den Innenraum des zylindrischen Körper, wodurch das zweite Medium, welches durch den Anschlußstutzen 6 eingeführt wird, radial nach innen zwischen die einzelnen Hohlfäden 4 geleitet wird. Der Verteilerraum 7 kann als ringförmiger Kanal ausgebildet sein. Der ringförmige Kanal kann auf dem Umfang jeweils gleichen Querschnitt aufweisen, wobei dann die auf dem Umfang verteilten Durchtrittsöffnungen 10 bevorzugt umso größeren Durchmesser aufweisen, je weiter sie vom Anschlußstutzen entfernt sind. Die Durchtrittsöffnungen können auch gleichen Durchmesser aufweisen, wobei der Abstand der einzelnen Durchtrittsöffnungen mit der Entfernung vom Anschlußstutzen 6 immer geringer wird. Die Querschnittsfläche des ringförmigen zweiten Verteilerraumes 7 kann auch mit der Entfernung des Anschlußstutzens 6 immer kleiner werden. Diese Maßnahmen bewirken jeweils allein oder auch in Kombination zweier oder aller drei Maßnahmen, daß das zweite Medium auf den Umfang des Hohlfadenbündels gleichmäßig beaufschlagt werden kann. Wenn das andere Ende des Stoff-oder Wärmeaustauschers in der gleichen Weise gestaltet wird, ist sichergestellt, daß auch die Abfuhr des zweiten Mediums radial nach außen über den Umfang des Hohlfadenbündels gleichmäßig erfolgt.

Zur Abdichtung des ersten Verteilerraumes 6 kann an der Innenseite der Kappe 6 eine umlaufende, spitz ausgebildete Nase 11 vorgesehen sein, die beim Aufsetzen der Kappe 1 in die Vergußmasse 3 eindringt. Dies soll in dem Bereich der Vergußmasse geschehen, in dem keine Hohlfäden mehr angeordnet sind. Es ist deshalb vorgesehen, daß zwischen dem Umfang des Hohlfadenbündels und der Innenwandung des rohrförmigen Körpers 2 ein mit Vergußmasse ausgefüllter geringer Zwischenraum vorhanden ist.

Zur Dichtung des zweiten Verteilerraums nach außen reichen in der Regel die Nasen 9. Die Kappe kann jedoch auch über eine Dichtmasse, einen Dichtring, durch Verkleben, Verschweißen o.ä. dicht auf der Außenwandung des überwiegend rohrförmigen Körpers angeordnet werden.

Eine besonders einfache Ausführungsform ergibt sich aus Figur 1o, wobei die Kappe 1 dann mit dem rohrförmigen Körper 2 unlösbar verbunden ist. Gleiche Teile wurden in Figur 1o mit derselben Numerierung versehen, so daß sich eine nochmalige Beschreibung -wie auch in den folgenden Figuren -erübrigt.

In der in Figur 1o dargestellten Ausführungsform kann die Kappe 1 mit dem rohrförmigen Körper 2 im Bereich 12 verklebt, verschweißt usw. werden.

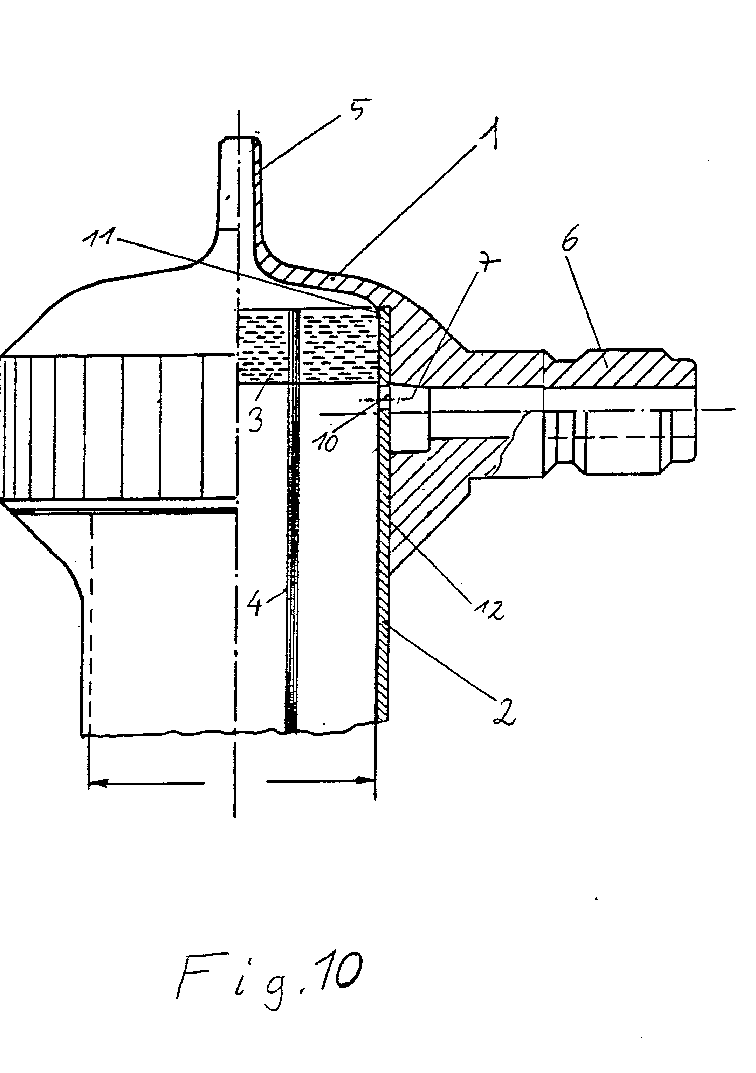

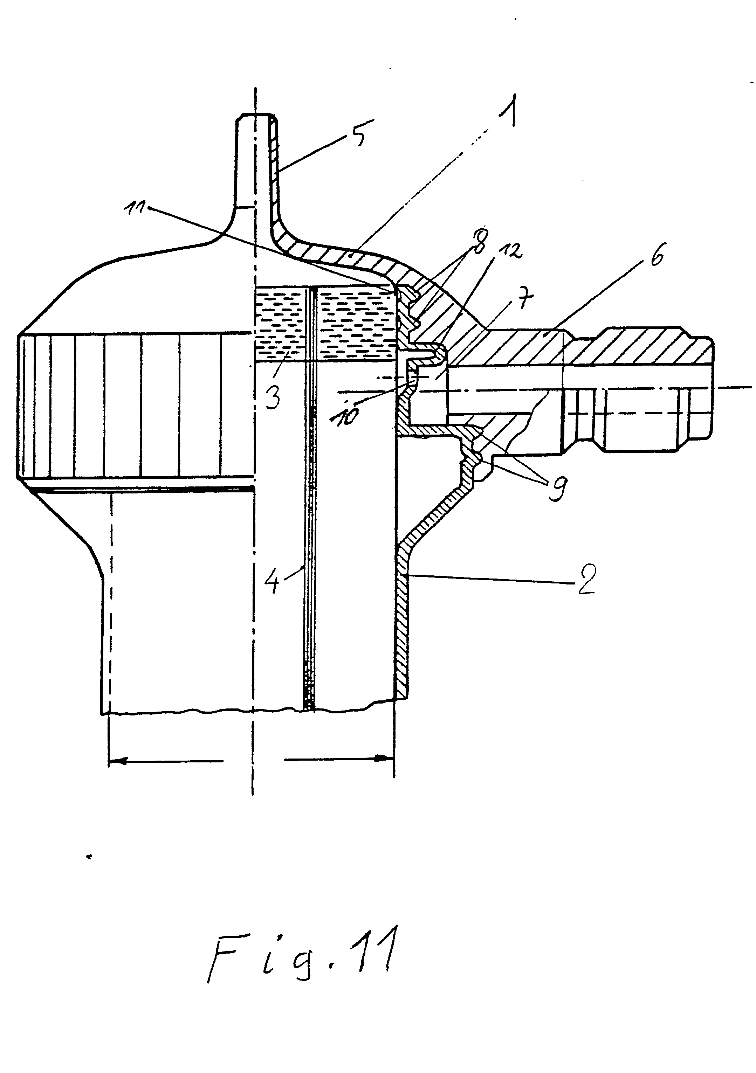

Figur 11 zeigt eine weitere Form der Abdichtung zwischen den einzelnen Verteilerräumen 7, 13. Hierbei wird der rohrförmige Körper 2 in Form eines (flexiblen) Balges 12 ausgebildet, welcher nach dem Aufschieben der Kappe und Einschnappen in die Nasen 8 und 9, an die Kappe gepreßt wird, wodurch eine besonders günstige Abdichtung bewirkt wird.

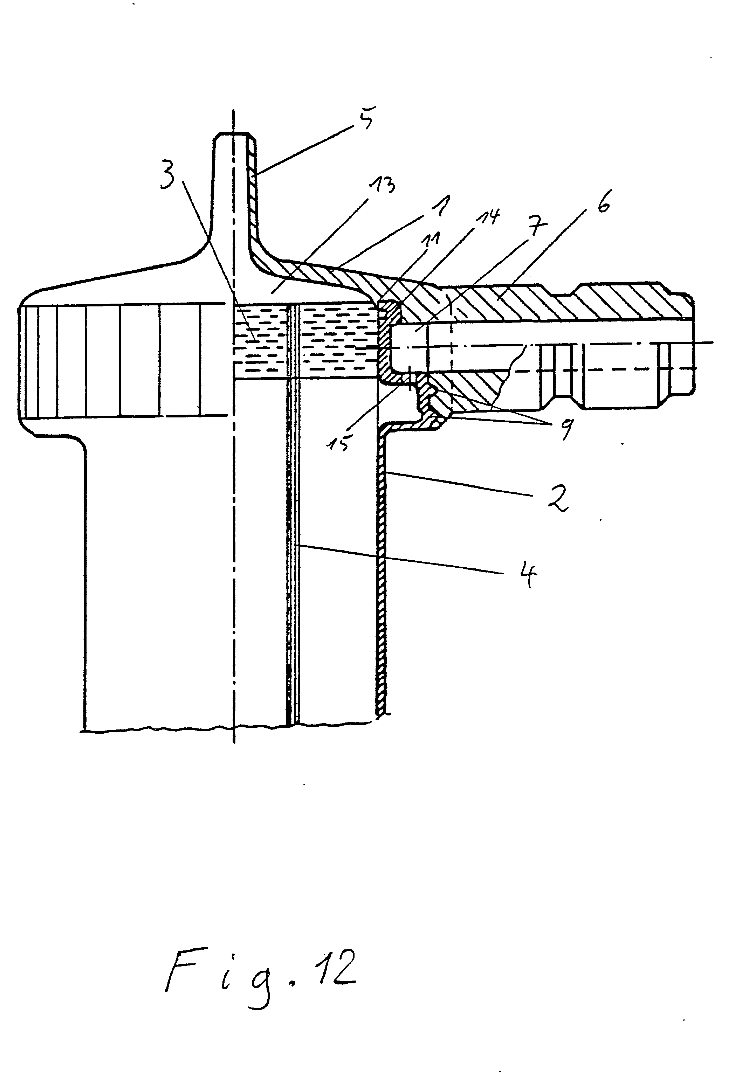

In Figur 12 wird gezeigt, daß die als Faltenbalg 14 ausgebildete Dichtlippe das Ende des rohrförmigen Körpers bilden kann. Weiterhin ist in Figur 12 dargestellt, durch welche Gestaltung des Endbereichs des rohrförmigen Körpers es möglich wird, die Durchtrittsöffnungen 15 axial durch die Wandung treten zu lassen.

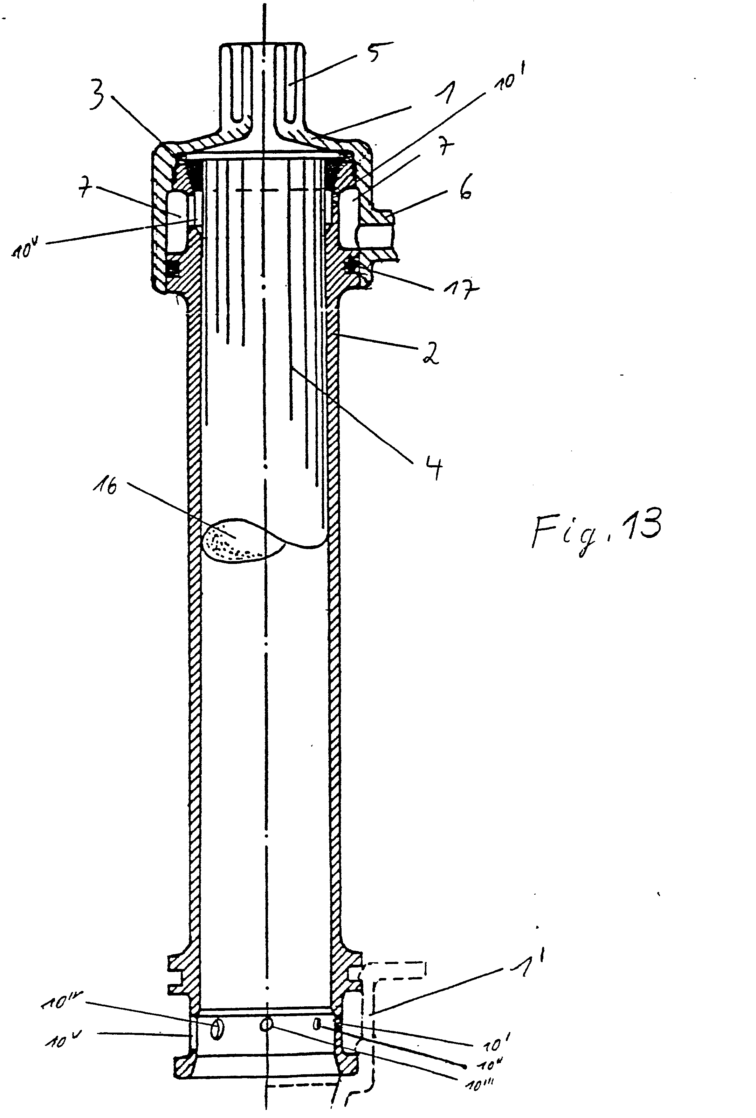

Figur 13 zeigt weitere Möglichkeiten der Ausgestaltung des erfindungsgemäßen Stoff-und/oder Wärmeaustauschers. Die Vergußmasse 3 ist hier in einer konischen Ausgestaltung der Innenwand des rohrförmigen Körpers 2 angeordnet. Der zweite Verteilerraum 7 ist als ringförmiger Kanal ausgebildet. Die Querschnittsflächen der Durchtrittsöffnungen sind unterschiedlich groß, und zwar derart, daß die Querschnittsfläche $10'$, $10''$, $10'''$, $10^{IV}$ und $10^{V}$ mit der Entfernung vom Anschlußstutzen 5 zunimmt. Die Durchtrittsöffnung $10^{V}$ kann bei der Herstellung des erfindungsgemäßen Stoff-und/oder Wärmeaustauschers bei Anwendung von Schleuderguß zum Einbringen der Vergußmasse, beispielsweise Polyurethan, dienen. Das Hohlfadenbündel 16 mit dem Stützelement erstreckt sich in seiner Querschnittsabmessung günstigerweise über den gesamten Innenquerschnitt des rohrförmigen Körpers 2. Die Abdichtung zwischen Kappe und rohrförmigen Körper kann auch durch 0-Ringe 17 bewirkt werden. Die Kappe kann auch als Schnappverschluß $1'$ ausgebildet sein. Diese Ausgestaltungen können einzeln oder in Kombination am erfindungsgemäßen Stoff-und/oder Wärmeaustauscher vorhanden sein.

In Figur 14 ist die Gestaltung der Innenwand des rohrförmigen Körpers 2 dargestellt. Im wesentlichen erweitert sich hier der Innenraum 18 vom einen Endbereich 21 bis zum anderen Endbereich 20 konisch. Die Konizität wird festgelegt durch $\alpha$ -(etwa 0,5 bis 1°). Eine weitere Konizität 19 im einen Endbereich kann, muß aber nicht vorgesehen sein. Beim Einführen oder Einsaugen des Hohlfadenbündels mit Stützelement auf der Seite mit dem geringeren Querschnitt (19/21) kann beispielsweise ein Trichter aufgesetzt werden. Durch die konische Erweiterung des Innenraums wird das Einführen des Hohlfadenbündels erleichtert. Die Endstücke 20 sind geringfügig erweitert zur Aufnahme der Vergußmasse,

In Figur 15 wird ein besonders günstiger Anwendungsfall des erfindungsgemäßen Stoff-und/oder Wärmeaustauschers dargestellt. Der Austauscher wird hier beispielsweise in eine Dialyseanlage eingesetzt, die in der Figur nicht dargestellt ist und neben der Trennungslinie 28 angeordnet ist. Zu dieser Anlage gehören auch die Anschlußschläuche (-rohre) 22, 23, 24, 25 für Blutzulauf (22), Blutablauf (23), Dialysatzulauf (24) und Dialysatablauf (25) sowie ein Pneumatikzylinder 26, über dessen Halter 27, 29 die Kappen 1, 1" mit dem Pneumatikzylinder eine Einheit bilden. Die Kappen des erfindungsgemäßen Austauschers sind somit Bestandteil der Dialyseanlage. Nur der rohrförmige Körper 2 mit dem Hohlfadenbündel 16 und dem Stützelement sind Wegwerfartikel. Die Kappe 1" ist über den Halter 29 ortsfest angeordnet, während die Kappe 1 über den Pneumatikhalter 26 axial bewegbar angeordnet ist. Beim Auswechseln der Patrone (rohrförmiger Körper 2 mit Hohlfadenbündel 16) und Stützelement), wird der Pneumatikzylinder auseinandergefahren, die Patrone gewechselt und dann der Pneumatikzylinder wieder zusammengefahren.

An Figur 16 kann das Verfahren gemäß Anspruch 22 beispielsweise erläutert werden. Hierbei ist lediglich ein Gehäuseende 6 dargestellt, welches am Ende 7 geringfügig erweitert ist. Zwischen Gehäuseerweiterung 7 und Gehäuse 6 ist ein Zu- bzw. Ablauf 8 angeordnet, der beispielsweise im Gehäuse als Spirale ausgebildet ist. Auf das erweiterte Gehäuseende 7 ist ein ringförmiger Körper 9 aufgesteckt bzw. aufgeschraubt, welcher sich an seinem freien Ende bis auf den gewünschten Hohlfadenbündelquerschnitt verjüngt.

Im dargestellten Beispiel soll das Hohlfadenbündel 10 mit Stützelement mittels Schleuderguß eingebettet werden. Hierzu muß der ringförmige Körper 9 mit einer Kappe 1 flüssigkeitsdicht verschlossen werden. Die Vergußmasse kann über den Zulauf 8 eingeführt werden. Es kann soviel Vergußmasse eingefüllt werden, bis die Vergußmasse den Zwischenraum 13 bis zur Linie 14 ausfüllt. Nach dem Festwerden der Vergußmasse kann der ringförmige Körper 9 mit der Kappe 11 abgenommen werden. Darauf wird das vergossene Bündel mit Stützelement im Bereich der Erweiterung beispielsweise entlang Linie 15 angeschnitten.

Zur Einführung des Hohlfadenbündels mit Stützelement in das mit dem ringförmigen Körper 9 versehene Gehäuse 6 kann im Gehäuse 6 ein Unterdruck erzeugt werden, wodurch das Hohlfadenbündel mit Stützelement in das Gehäuse eingesaugt wird. Sofern in den einzelnen Hohlfäden herstellungsbedingt noch Flüssigkeit enthalten ist, kann diese durch den Unterdruck ebenfalls aus den Hohlfäden abgesaugt werden.

In die Vergußmasse können Schikanen, beispielsweise Strömungswiderstände, zusätzlich eingebaut werden, die beim späteren Betreiben des Moduls die über den Zu- bzw. Ablauf fließende Flüssigkeit bis zur Kontur der Vergußmasse (Linie 14) wirksam hinführen.

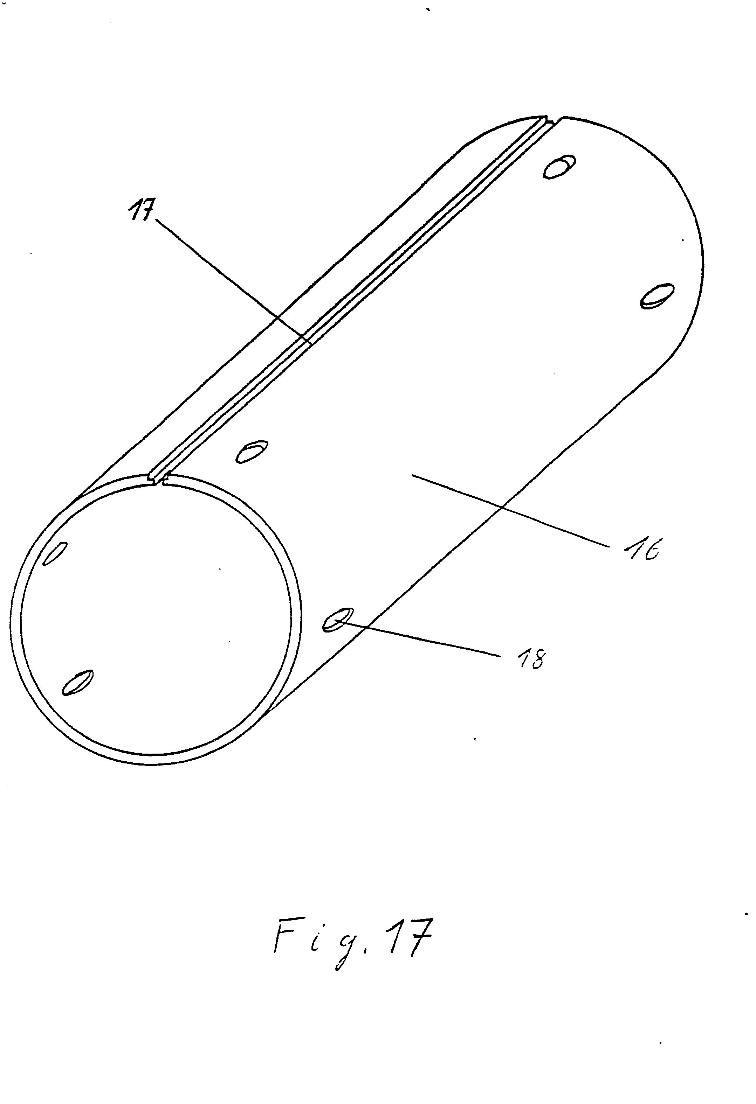

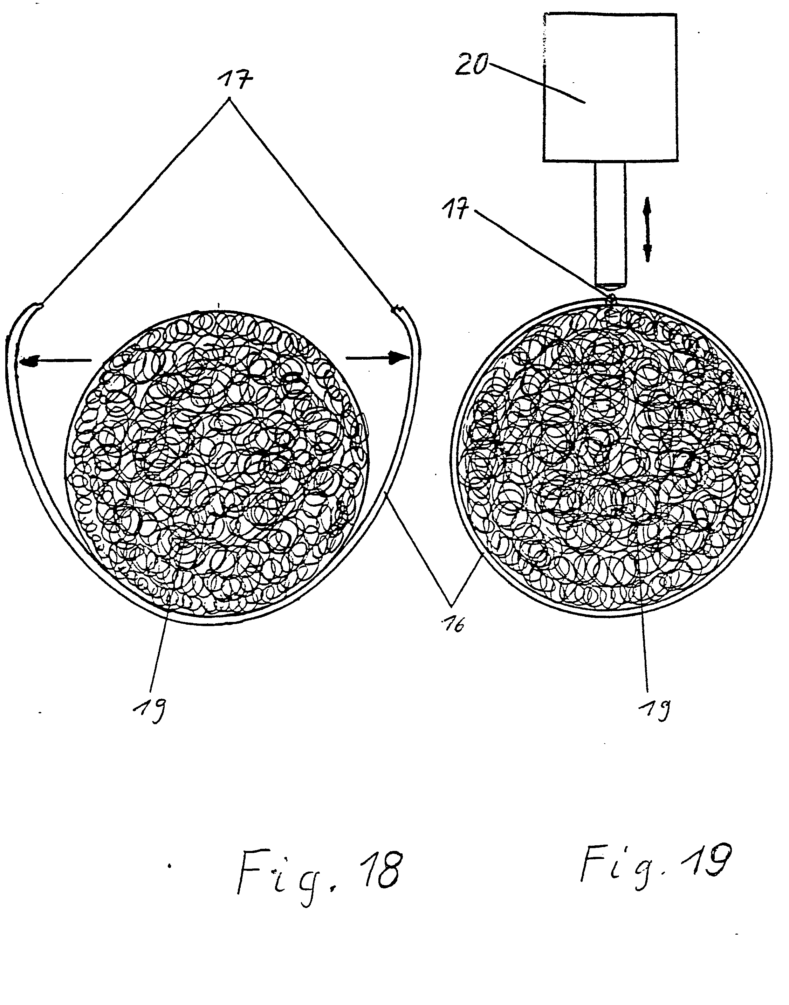

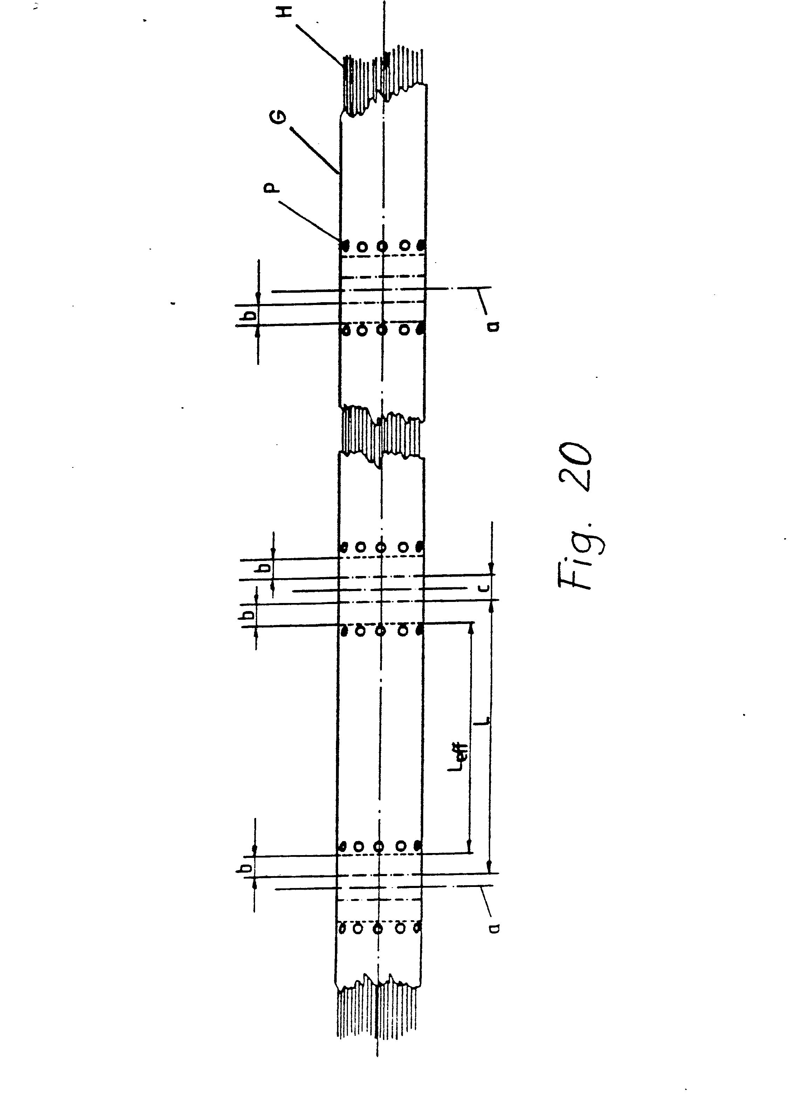

Aus den Figurn 17 bis 19 ist das Verfahren gemäß Anspruch 23 ersichtlich. 16 ist ein Rohr, welches längs der Linie 17 axial aufgetrennt ist. Die Öffnungen 18 dienen der Zu- bzw. Abfur von Austauschmedien. Das schematisch dargestellte Hohlfadenbündel 19 mit Stützelement wird in das aufgebogene Rohr 16 eingelegt (Figur 18). Anschließend wird, wie in Figur 19 dargestellt, das Rohr 16 zusammengefügt und an der Trennlinie 17 verbunden, beispielsweise durch Kleben, Schweißen oder zusätzlich angebrachte mechanische Hilfsmittel.

Über das verschlossene Rohr wird an beiden Enden je eine Abschlußkappe angebracht. Diese Abschlußkappe kann vorzugsweise Zu- bzw. Abführeinrichtungen für beide Austauschmedien, die um bzw. durch die Hohlfäden hindurchfließen sollen, enthalten. Das Rohr 16 kann aber auch selbst als Stützelement zur Aufnahme des Hohlfadenbündels dienen.

Aus Figur 20 ist das Wesentliche des Verfahrens nach Anspruch 24 dargestellt. In das die vielfache Länge des fertigen Austauschers aufweisende Mehrfachgehäuse G ist ein ebensolanges Hohlfadenbündel H mit Stützelement eingeführt. Das Mehrfachgehäuse G weist in den als Gehäuseendabschnitten vorgesehen Bereichen b Wanddurchbrüche P für die Zu- bzw. Abfur von Austauschmedien auf. In den Bereichen c wird das Mehrfachgehäuse G mit dem sich darin befindlichen Hohlfadenbündel H mit Stützelement zertrennt. Anschließend werden die Hohlfadenendabschnitte mit Stützelement in den Bereichen zwischen den Trennstellen c und den Wanddurchbrüchen P mittels einer Vergußmasse abgedichtet. Danach werden durch Abtrennen eines - scheibenförmigen Teils der Vergußmasse mit den darin eingegossenen Hohlfadenendabschnitten mit Stützelement die Austauscher auf die gewünschte Länge L zugeschnitten und die nicht verschlossenen Hohlfadenenden freigelegt. Die den Stoff- und/oder Wärmeaustausch bewirkende effektive Länge der Hohlfäden beträgt $L_{eff}$. Auf diese Weise lassen sich aus einem Hohlfadenbündel mit einer Austauscheroberfläche von beispielsweise 0,5 bis 5 m² zwei bis dreißig aber auch mehr Austauscher auf sehr rationelle Weise herstellen. Das Mehrfachgehäuse G selbst kann aber auch als Stützelement zur Aufnahme des Hohlfadenbündels dienen.

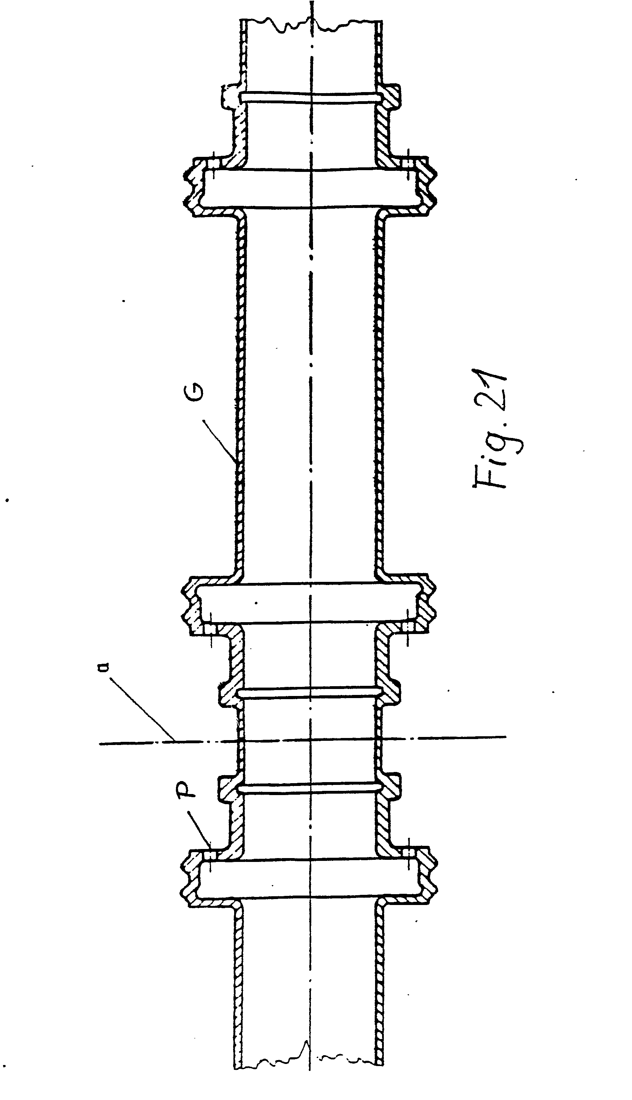

Das Mehrfachgehäuse G braucht jedoch nicht als im wesentlichen glatter Zylinder ausgebildet zu sein, sondern es kann wie in Figur 21 dargestellt, auch einer Blasformtechnik hergestellt worden sein und eine Außenkontur aufweisen, die beispielsweise das Aufsetzen der Kappen erleichtert und/oder bereits den am Außenmantel angeordneten Verteilerraum mit den Durchtrittsöffnungen P aufweist. Das Zertrennen des Mehrfachgehäuses G mit den sich darin befindenden Hohlfäden mit Stützelement (nicht dargestellt), das anschließende Eingießen der Hohlfadenenden mit Stützelement und das Freilegen der nichteingegossenen Hohlfadenenden erfolgt auch hierbei wie in der Beschreibung von Figur 20 beschrieben.

**Ansprüche**

1. Stoff-und/oder Wärmeaustauscher, bestehend aus einem Bündel von Hohlfäden von im wesentlichen gleicher Länge, deren Enden in eine Vergußmasse eingebettet sind, und einem im wesentlichen zylindrischen Gehäuse mit Anschlußstutzen zur Zu-und Abfuhr mindestens zweier Medien, wobei das erste Medium durch die Hohlfäden hindurch und das zweite Medium am Strömungseingang des Gehäuses radial nach innen, am Strömungsausgang radial nach außen geführt wird und das Gehäuse aus einem im wesentlichen rohrförmigen Körper und zwei Kappen besteht, gekennzeichnet durch ein zwischen dem Hohlfadenbündel und dem Gehäusemantel angeordnetes Stützelement, das wenigstens je eine Durchtrittsöffnung aufweist, die mit dem Strömungseingang bzw. -ausgang im rohrförmigen Körper in Verbindung steht.

2. Austauscher nach Anspruch 1, dadurch gekennzeichnet, daß das Stützelement aus einem porösen Werkstoff besteht.

3. Austauscher nach Anspruch 1 oder 2, dadurch gekennzeichnet, daß der radiale Abstand zwischen dem Stützelement und dem Gehäusemantel zumindest auf einem Längenabschnitt über den Umfang zumindest annähernd Null ist.

4. Austauscher nach einem der Ansprüche 1 bis 3, dadurch gekennzeichnet, daß das Stützelement in Längsrichtung um einen vorgegebenen Betrag verformbar ist.

5. Austauscher nach einem der Ansprüche 1 bis 4, dadurch gekennzeichnet, daß das Stützelement wenigstens eine in Längsrichtung verlaufende Fuge aufweist.

6. Austauscher nach einem der Ansprüche 1 bis 5, dadurch gekennzeichnet, daß die beiden Vergußmasseeinbettungen ähnliche Querschnitte unterschiedlicher Größe aufweisen.

7. Austauscher nach einem der Ansprüche 1 bis 6, dadurch gekennzeichnet, daß das Stützelement dieselbe Länge hat wie das Hohlfadenbündel einschließlich der Vergußmasseeinbettungen und daß die Vergußmasse mit dem Stützelement fest verbunden ist.

8. Austauscher nach einem der Ansprüche 1 bis 7, dadurch gekennzeichnet, daß zumindest der Gehäusemantel mit den übrigen Teilen des Austauschers lösbar verbunden ist und daß der Gehäusemantel die Anschlußstutzen zur Zu-und Abfuhr des zweiten Mediums aufweist.

9. Austauscher nach Anspruch 8, dadurch gekennzeichnet, daß zumindest der Gehäusemantel als wiederverwendbares Teil eines Austauscheranlage dient.

10. Hohlfadenbündel geeignet zur Verwendung in einem Austauscher nach einem der Ansprüche 1 bis 9 bestehend aus Hohlfäden von im wesentlichen gleicher Länge, deren Enden in eine Vergußmasse eingebettet sind, gekennzeichnet durch ein das Hohlfadenbündel umgebendes mit den Vergußmasseeinbettungen verbundenes Stützelement, das wenigstens eine Durchtrittsöffnung für die Zufuhr und eine Durchtrittsöffnung für die Abfuhr des zweiten Mediums aufweist.

11. Hohlfadenbündel nach Anspruch 10, dadurch gekennzeichnet, daß das Stützelement aus einem porösen Werkstoff besteht.

12. Hohlfadenbündel nach Anspruch 10 oder 11, dadurch gekennzeichnet, daß die Außenkontur des Querschnitts des Stützelementes zumindest auf einem Längenabschnitt nur geringfügig kleiner als die bis annähernd gleich der Innenkontur des Querschnitts des Gehäusemantels des Austauschers an diesem Längenabschnitt bemessen ist.

13. Hohlfadenbündel nach einem der Ansprüche 10 bis 12, dadurch gekennzeichnet, daß das Stützelement in Längsrichtung um einen vorgegebenen Betrag verformbar ist.

14. Hohlfadenbündel nach einem der Ansprüche 10 bis 13, dadurch gekennzeichnet, daß das Stützelement wenigstens eine in seiner Längsrichtung verlaufende Fuge aufweist.

15. Hohlfadenbündel nach einem der Ansprüche 10 bis 14, dadurch gekennzeichnet, daß die beiden Vergußmasseeinbettungen ähnliche Querschnitte unterschiedlicher Größe aufweisen.

16. Hohlfadenbündel nach einem der Ansprüche 10 bis 15, dadurch gekennzeichnet, daß das Stützelement dieselbe Länge hat wie die Hohlfäden einschließlich der Vergußmasseeinbettungen und daß die Vergußmasse mit dem Stützelement fest verbunden ist.

17. Hohlfadenbündel nach einem der Ansprüche 10 bis 16, dadurch gekennzeichnet, daß das Stützelement vor dem Einbringen in den Gehäusemantel des Austauschers einen Außenumfang aufweist, der kleiner ist als der Innenumfang des Gehäusemantels des Austauschers, und aus einem Material besteht, das beim bestimmungsgemäßen Gebrauch des Austauschers oder durch eine Spezialbehandlung sein Volumen vergrößert.

18. Hohlfadenbündel nach einem der Ansprüche 10 bis 16, dadurch gekennzeichnet, daß das Stützelement in radialer Richtung elastisch verformbar ist und vor dem Einbringen in den Gehäusemantel des Austauschers • einen Außenumfang aufweist, der größer ist als der Innenumfang des Gehäusemantels des Austauschers.

19. Hohlfadenbündel nach einem der Ansprüche 10 bis 18, dadurch gekennzeichnet, daß das Stützelement Dichtflächen zum Abdichten der Verteilerräume für das erste Medium gegenüber den Verteilerräumen für das zweite Medium aufweist.

20. Hohlfadenbündel nach einem der Ansprüche 10 bis 19, dadurch gekennzeichnet, daß es wenigstens eine der beiden Kappen aufweist und mit dieser im Bereich der Vergußmasseeinbettungen fluiddicht verbunden ist.

21. Stoff-und/oder Wärmeaustauscher nach einem der Ansprüche 1 bis 9 oder 20, dadurch gekennzeichnet, daß alle Anschlußstutzen in den Kappen angeordnet sind, die Kappen mit den Enden des im wesentlichen rohrförmigen Körpers jeweils zwei voneinander dicht getrennte Verteilerräume bilden, von denen der erste stirnseitig und der zweite am Außenmantel des rohrförmigen Körpers angeordnet ist, und der Außenmantel des rohrförmigen Körpers im Bereich des zweiten Verteilerraumes mindestens eine Durchtrittsöffnung aufweist.

22. Verfahren geeignet zum Herstellen des Stoff-und/oder Wärmeaustauschers nach einem der Ansprüche 1 bis 9 oder 21 bei dem ein Hohlfadenbündel axial in ein Gehäuse eingeführt und mittels einer Vergußmasse an beiden Enden abgedichtet wird, dadurch gekennzeichnet, daß ein rohrförmiges Gehäuse, dessen beide Enden möglichst geringfügig erweitert sind, wobei auf die erweiterten Enden des Gehäuses je ein ringförmiger Körper aufgebracht wird, der am freien Ende in seiner Innenabmessung der Außenkontur des Hohlfadenbündels mit Stützelement entspricht und von dieser Innenabmessung zunächst auf die Innenkontur des erweiterten Endes des Gehäuses übergeht, verwendet wird, daß die Enden des eingeführten Hohlfadenbündels mit Stützelement derart in eine Vergußmasse dichteingebettet werden, daß die Vergußmasse den freien Raum im ringförmigen Körper und zumindest teilweise im erweiterten Gehäuseende ausfüllt, daß nach dem Festwerden der Vergußmasse der ringförmige Körper entfernt wird und daß dann das überstehende, mit Vergußmasse zusammengefaßte Hohlfadenbündelende mit Stützelement außerhalb des Gehäuses im Bereich, in dem der Außenquerschnitt der Vergußmasse größer ist als der Außenquerschnitt des Hohlfadenbündels, abgeschnitten wird.

23. Verfahren geeignet zum Herstellen des Stoff-und/oder Wärmeaustauschers nach einem der Ansprüche 1 bis 9 oder 21 bei dem ein Hohlfadenbündel radial in ein Gehäuse eingeführt und mittels Vergußmasse an beiden Enden abgedichtet wird, dadurch gekennzeichnet, daß das Hohlfadenbündel mit Stützelement in ein flexibles, axial aufgetrenntes, aufgebogenes Rohr eingelegt wird, das Rohr in die gewünschte geschlossene Form gebracht und an der axialen Trennlinie verbunden wird.

24. Verfahren geeignet zum Herstellen des Stoff-und/oder Wärmeaustauschers nach einem der Ansprüche 1 bis 9 oder 21 bei welchem ein Hohlfadenbündel axial in ein Gehäuse eingeführt wird, dadurch gekennzeichnet, daß ein Hohlfadenbündel mit Stützelement mit einer zwei-bis vielfachen Länge des Hohlfadenbündels im fertigen Austauscher in ein ebensolanges Mehrfachgehäuse eingeführt wird, das in den als Gehäuseendabschnitten vorgesehenen Bereichen Wanddurchbrüche für die Zu-bzw. Abfuhr von Austauschmedien aufweist, daß das Gehäuse mit dem sich darin befindenden Hohlfadenbündel mit Stützelement zu Austauschern gewünschter Länge zertrennt wird und daß die Hohlfadenendabschnitte anschließend in den Bereichen zwischen den Trennstellen und den Wanddurchbrüchen mittels einer Vergußmasse abgedichtet werden.

Fig. 1

Fig. 2

Fig. 3

Fig. 4

Fig. 5

Fig. 6

Fig. 7

Fig. 8

*Fig. 9*

Fig. 10

Fig. 11

Fig. 12

Fig. 13

20

α

2

18

21

19

20

Fig. 14

Fig.15

Fig. 16

17

16

18

Fig. 17

Fig. 18

Fig. 19

Fig. 20

Fig. 21